Europäisches Patentamt

(19) European Patent Office

Office européen des brevets

(11) Publication number: **0 100 780**
**B1**

# (12) EUROPEAN PATENT SPECIFICATION

(45) Date of publication of patent specification: **20.11.86**

(51) Int. Cl.⁴: **C 09 D 1/00, C 04 B 41/50**

(21) Application number: **82107285.7**

(22) Date of filing: **11.08.82**

(54) **Method for formation of coating film of silicon oxide.**

(43) Date of publication of application:
**22.02.84 Bulletin 84/08**

(45) Publication of the grant of the patent:
**20.11.86 Bulletin 86/47**

(84) Designated Contracting States:
**DE FR GB NL**

(56) References cited:
**FR-A-2 330 745**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Horikiri, Shozo**
**10-20, Tsukaguchihommachi 2-chome**
**Amagasaki Hyogo (JP)**
Inventor: **Yako, Tadaaki**
**566-8, Hagyu Niihama**
**Ehime (JP)**

(74) Representative: **von Kreisler, Alek, Dipl.-Chem. et al**
**Deichmannhaus am Hauptbahnhof**
**D-5000 Köln 1 (DE)**

Courier Press, Leamington Spa, England.

# 0 100 780

**Description**

The present invention relates to a method for formation of a coating film of silicon oxide ($SiO_2$) on the surface of an inorganic substrate.

Hitherto, the formation of a coating film of silicon oxide on the surface of an inorganic substrate has usually been accomplished by the sputtering method or the gas phase growth method. These methods require complex apparatuses and can hardly form a coating film of uniform quality over a broad area.

In order to overcome these drawbacks, there has been proposed a method wherein a coating composition comprising the reaction product of an alkoxysilane or a halogenated silane with a lower alkanoic acid and a lower alkanol is applied onto the surface of an inorganic substrate, followed by heat treatment (cf. Japanese Patent Publications (unexamined) Nos. 103533/75, 104521/77, 34258/78 and 34276/78). However, the coating film of silicon oxide formed by such method is not satisfactory in having pinholes, cracks, etc. Further, an extremely long time (e.g. 24 hours or more) is needed for production of the said reaction product, and therefore the productivity of the method is low.

Although a method using a coating composition comprising the reaction product obtainable easily by hydrolyzing an alkoxysilane with water in an amount of not more than 8 mol per 1 mol of the alkoxysilane has been proposed (cf. Japanese Patent Publication (unexamined) No. 93922/76), the coating film formed thereby is also not satisfactory in having pinholes, cracks, etc.

Common to all the conventional methods as above mentioned, the coating compositions comprise insufficiently hydrolyzed products, and therefore cratering or unevenness is readily produced and a uniform coating film is hardly obtainable. In addition, the coating compositions tend to be decomposed due to the moisture in the air during the storage.

As a result of the extensive study, it has now been found that a coating composition comprising silicic acid dissolved in a polar organic solvent is quite suitable for formation of a coating film of silicon oxide of uniform quality.

According to the present invention, there is provided a coating composition for formation of a coating film of silicon oxide on the surface of an inorganic substrate comprising a polar organic solvent and silicic acid dissolved therein, the molar ratio of water and silicic acid therein being not more than 5 and the silicic acid being the one prepared by acidifying at least one silicon compound chosen from silicic acid and its salts with an acid in an aqueous medium.

Furthermore, there is provided a method for formation of a coating film of silicon oxide on the surface of an inorganic substrate by applying a coating composition comprising a silicon compound onto the said surface to make a coating composition layer and subjecting the said surface having the coating composition layer to heat treatment to make a coating film of silicon oxide, characterized in that a coating composition is applied to the surface of an inorganic substrate which composition comprises a polar organic solvent and silicic acid dissolved therein, the molar ratio of water and silicic acid therein being not more than 5 and the silicic acid being the one prepared by acidifying at least one silicon compound chosen from silicic acid and its salts with an acid in an aqueous medium.

The coating composition of the invention can afford a coating film having a uniform surface of high hardness without any pinhole or crack. Further, the coating composition can be prepared within a short period of time and is of high productivity. Moreover, the coating composition is highly stable and can be stored over a long period of time without any material change.

The coating composition may be prepared, for instance, by acidifying at least one silicon compound chosen from silicic acid and its salts in an aqueous medium and extracting silicic acid in the resulting aqueous solution with a polar organic solvent.

The silicon compound to be used as the starting material is at least one chosen from silicic acid and its salts. Specific examples are synthetic silicates (e.g. silicic acid, silica sol, lithium silicate, potassium silicate, sodium silicate, ammonium silicate, calcium silicate, magnesium silicate, water glass, lithium water glass, potassium water glass, zeolite X, zeolite Y, zeolite A, zeolite L), natural silicate minerals (e.g. chrysolite, hornblende, mica, talc, wollastonite, analcite, serpentine, asbestos), etc.

For preparation of the coating composition, the silicon compound is first subjected to acidation. The acidation may be accomplished, for instance, by treatment of the silicon compound with an acid or a cationic exchange resin which can react with the base portion of the silicon compound in an aqueous medium. Examples of the acid are hydrochloric acid, sulfuric acid, nitric acid, phosphoric acid, sulfonic acid, chlorosulfonic acid, bromic acid, acetic acid, chloroacetic acid, formic acid, oxalic acid, propionic acid, acrylic acid, methacrylic acid, acetoacetic acid, citric acid, gluconic acid, glycollic acid, caprylic acid, caproic acid, etc. The amount of the acid depends upon the kind of the silicon compound, the acidity of the acid, the treating conditions, etc. and should be such as sufficient to convert the silicon compound into silicic acid, usually from 1 to 100 equivalents to the silicon compound. When the silicon compound is insoluble or hardly soluble in water, the amount of the acid may be relatively increased to enhance the yield of silicic acid. The acidation is normally effected at a temperature of 0 to 100°C within a period of 10 minutes to 5 hours. The acidation is ordinarily carried out at a pH of not more than 4, because silicic acid gel tends to be produced at a higher pH.

The resulting aqueous solution of silicic acid is then treated with a polar organic solvent to extract silicic acid therein. When any precipitate of fine particles is present in the aqueous silicic acid solution, it is

2

preferred to remove such precipitate, for instance, by filtration prior to the extraction. Examples of the organic solvent are methanol, ethanol, propanol, butanol, tetrahydrofuran, dioxane, acetone, methylethylketone, methylisobutylketone, diethylketone, methyl acetate, ethyl acetate, etc. Among them, methanol and tetrahydrofuran are favorable. The amount of the organic solvent may be of suffice for achievement of the satisfactory transfer of silicic acid in the water layer to the organic solvent layer and is usually from 5 to 100 parts by weight to 1 part by weight of silicic acid in terms of silicon oxide.

Whether or not the organic solvent layer can be well separated from the water layer depends upon the kind and amount of the organic solvent. When the separation is not good or insufficient, an inorganic electrolyte may be incorporated therein so as to attain good or sufficient separation. Thus, the presence of an inorganic electrolyte on the extraction is effective in promotion of easy and clear separation between the organic solvent layer and the water layer. It is also effective in acceleration of the transfer of silicic acid from the water layer to the organic solvent layer. Examples of the inorganic electrolyte are sodium chloride, potassium chloride, ammonium chloride, calcium chloride, sodium sulfate, potassium sulfate, ammonium sulfate, magnesium sulfate, etc. The amount of the inorganic electrolyte may be of suffice to accomplish the good and sufficient separation and is normally from 1 to 20 parts by weight to 1 part by weight of silicic acid in terms of silicon oxide.

In addition or alternatively, the extraction may be effected in the presence of any solid dehydrating agent, or the aqueous silicic acid solution or the organic solvent layer containing silicic acid may be treated with any solid dehydrating agent, whereby water can be eliminated. Examples of the solid dehydrating agent are silica gel, activated alumina, molecular sieve, dehydrated sodium sulfate, dehydrated cupric sulfate, etc.

For the use of the resultant organic solvent solution containing silicic acid as a coating composition, it is required to have a molar ratio of water and silicic acid of not more than 5, preferably of not more than 3. When the molar ratio is more than 5, the formation of a coating film having no pinhole or crack can not be assured. In addition, the coating film tends to have unevenness. Therefore, in the case that the organic solvent solution containing silicic acid has a molar ratio of water and silicic acid of more than 5, such solution is incorporated with silicic acid or subjected to treatment for water elimination so as to make a molar ratio of 5 or less.

When desired, the organic solvent solution containing silicic acid may be incorporated with any additive. Examples of the additive are a polyvalent alcohol (e.g. ethylene glycol, propylene glycol, triethylene glycol, glycerol), a chelate-forming compound (e.g. acetylacetone, ethyl acetoacetate, diacetonealcohol), an oxygenated high boiling point solvent (e.g. ethyleneglycol monoethyl ether, diethyleneglycol monoethyl ether, diethyleneglycol diethyl ether), a high molecular film forming agent (e.g. polyvinyl butyral, polyvinyl pyrrolidone, polyvinyl acetate), etc. Also, any modifier which is soluble in the said organic solvent and can be baked to give an oxide may be incorporated therein. Examples of the modifier are boron compounds (e.g. boric acid, boron oxide, alkyl borate), phosphorus compounds (e.g. phosphoric acid, phosphorous acid, phosphorus pentoxide, pyrophosphoric acid, alkyl phosphate, alkylphosphin), arsenic compounds (e.g. arsenic acid, arsenous acid, alkyl arsenate, alkyl arsenic), antimony compounds (e.g. antimonic acid, antimony oxide, alkyl antimonate, alkyl antimony), etc.

The concentrations of the additive and the modifier are varied with the condition at the use of the coating composition, the properties required for the coating film to be formed, etc. Usually, the concentrations of the oxygenated high boiling point solvent and of the high molecular film forming agent are respectively not more than 40% by weight and not more than 10% by weight on the basis of the weight of the coating composition. The modifier may be used in an amount of not more than 100 parts by weight, preferably not more than 50 parts by weight, in terms of its oxide to 100 parts by weight of silicic acid in terms of silicon oxide.

The thus obtained coating composition may be, as such or after dilution with the said polar organic solvent, applied onto the surface of an inorganic substrate. On the application, the concentration of silicic acid in the composition may be usually from 0.1 to 20% by weight in terms of silicon oxide. The organic solvent for dilution may be of the same kind as or the different kind from the one used for extraction of silicic acid.

As the inorganic substrate to which the coating composition is applicable, there are exemplified glass, ceramics, minerals, single crystals such as silicon and GaAs, etc. Particularly favorable is glass.

Prior to the application of the coating composition, the surface of the inorganic substrate is favorably cleaned, for instance, by washing so that a more perfect coating film can be formed. The application may be accomplished by a conventional procedure such as the spraying method, the dipping method, the spin-on method or the roll coater method. If necessary, the moisture content and the solvent vapor concentration in the atmosphere wherein the application is effected may be appropriately controlled so as to assure the uniformity of the coating film to be formed. The inorganic substrate applied with the coating composition is then subjected to heat treatment (i.e. baking) at a temperature of not lower than 150°C to make a coating film of silicon oxide.

By the use of the coating composition of the invention, a coating film of silicon oxide having a thickness of 0.02 to 5 μm and being transparent and uniform can be readily formed without any pinhole or crack.

The coating film of silicon oxide thus formed serves effectively to protect chemically and physically the surface of glass, prevent the diffusion of impurities from semi-conductors or glass, attain electric insulation, control the electro-conductivity due to doping with impurities, assure the smoothness of the surface, etc. Particularly, it is useful as a film for protecting the dissolution of sodium from a glass for liquid crystal, a film for stabilization and separation of layers at the surface of a semi-conductor, a diffusion source film, a surface protecting film, a smoothing film of IC substrate, etc.

Practical and presently preferred embodiments of the present invention are illustratively shown in the following Examples wherein part(s) and % are by weight unless otherwise indicated.

Examples 1 to 5 and Comparative Examples 1 and 2

Into a 500 ml volume flask equipped with a stirrer, sulfuric acid (0.64 mol/liter; 200 ml) was charged, and water glass (JIS No. 2) (0.8 mol/liter; 100 ml) was dropwise added thereto in 10 minutes to obtain an aqueous silicic acid solution having a molar ratio of water and silicic acid of 80.

To the aqueous silicic acid solution, tetrahydrofuran (200 ml) and an inorganic electrolyte as shown in Table 1 were added, and the resultant mixture was stirred vigorously and then allowed to stand. The tetrahydrofuran layer containing silicic acid was separated and recovered. The thus obtained organic silicic acid solution had a molar ratio of water and silicic acid as shown in Table 1.

The organic silicic acid solution was diluted with tetrahydrofuran to make a concentration of 3% of silicic acid in terms of silicon oxide. A glass plate was dipped in the diluted silicic acid solution, taken out with a constant rate and then baked at 450°C for 30 minutes to make a coating film of silicon oxide having a thickness of 100 nm (1000 Å).

The coating film was treated with an etching solution comprising 55% hydrofluoric acid, 60% nitric acid and water in a weight proportion of 15:10:600, and the etching rate was measured. Also, the surface state of the coating film was observed by naked eye and an optical microscope. The results are shown in Table 1 in which the cases wherein the molar ratio of water and silicic acid was more than 5 are also shown for comparison.

TABLE 1

| Example | Inorganic electrolyte | | Molar ratio of $H_2O/Si(OH)_4$ | Physical property | |
| | Kind | Amount (g) | | Etching rate (Å/min) [nm/min] | Surface state |
|---|---|---|---|---|---|
| 1 | Sodium chloride | 80 | 0.5 | 400 [40] | Good |
| 2 | Sodium chloride | 40 | 2 | 450 [45] | Good |
| 3 | Ammonium chloride | 80 | 1 | 350 [35] | Good |
| 4 | Ammonium chloride | 40 | 2.5 | 500 [50] | Good |
| 5 | Ammonium sulfate | 60 | 4 | 650 [65] | Good |
| Comparative 1 | Sodium chloride | 20 | 10 | 850 [85] | Partly uneven |
| Comparative 2 | Magnesium sulfate | 20 | 50 | 1000 [100] | Partly uneven, small crack |

Example 6

To the organic silicic acid solution (100 g) obtained in Comparative Example 1, dry silica gel (20 g) was added, and the resultant mixture was allowed to stand overnight, followed by filtration. Using the filtrate (molar ratio of water and silicic acid being 3) as the coating composition, a coating film of silicon oxide was formed as in Example 1. The coting film showed a good surface state, and the etching rate was 60 nm/min (600 Å/min).

Example 7

A column having a diameter of 25 mmφ and a length of 500 mm and equipped with a cock at the lower position was packed with H-type cationic exchange resin "Amberlite[R] IR-120B", and water glass (JIS No. 2) (0.8 mol/liter) was passed through the column for acidation. The acidified solution (molar ratio of water and silicic acid being 24) (100 ml) was admixed with tetrahydrofuran (200 ml) and transferred into a separation funnel. After addition of sodium chloride (80 g), the funnel was shaken vigorously and then allowed to stand. The tetrahydrofuran layer containing silicic acid was separated and recovered. The resulting organic silicic acid solution had a molar ratio of water and silicic acid of not more than 0.5.

The organic silicic acid solution was diluted with tetrahydrofuran to make a concentration of 3% of silicic acid in terms of silicon oxide. Using the diluted silicic acid solution as the coating composition, a coating film of silicon oxide was formed as in Example 1. The coating film showed a good surface state, and the etching rate was 45 nm/min (450 Å/min).

Example 8

Into a 1000 ml volume flask equipped with a stirrer, conc. hydrochloric acid (500 ml) and synthetic zeolite A-4 of less than 200 mesh (20 g) were charged, and stirring was continued at room temperature for 2 hours. The pH was adjusted to 1—1.5 with ammonia water. The resultant mixture was filtered to eliminate precipitated materials. The filtrate (molar ratio of water and silicic acid being 125) was admixed with tetrahydrofuran (200 ml) and sodium chloride (120 g), stirred vigorously and allowed to stand. The tetrahydrofuran layer containing silicic acid was separated and recovered. The resulting organic silicic acid solution had a molar ratio of water and silicic acid of 2.

The organic silicic acid solution was diluted with tetrahydrofuran to make a concentration of 3% of silicic acid in terms of silicon oxide. Using the diluted silicic acid solution, a coating film of silicon oxide was formed as in Example 1. The coating film showed a good surface state and the etching rate was 60 nm/min (600 Å/min).

Examples 9 and 10

To the organic silicic acid solution obtained in Example 1, boron oxide or phosphorus pentoxide as a modifier was added to make a concentration of 0.1% (i.e. 3.3% to $SiO_2$). The resulting organic silicic acid solution was diluted with tetrahydrofuran to make a concentration of 3% of silicic acid in terms of silicon oxide. Using the diluted solution, a coating film of silicon oxide was formed as in Example 1. The etching rate and the specific resistance of the coating film are shown in Table 2.

Comparative Example 3

To a mixture of propyl orthosilicate (264 g), propionic acid (296 g) and propanol (240 g), salicylic acid (10 g) was added at room temperature while stirring, and stirring was continued for 3 hours. After allowing to stand at room temperature for 4 days, a mixture of methanol and acetone (3:1 by weight) was added thereto to make a concentration of 5.9% of silicic acid in terms of silicon oxide. In the resulting solution, phosphorus pentoxide (1.01 g) was dissolved to make a coating composition. Using the coating composition, a coating film of silicon oxide was formed as in Example 1. The etching rate and the specific resistance of the coating film are shown in Table 2.

TABLE 2

| Example | Modifier | Film thickness (Å) [nm] | Etching rate (Å/min) [nm/min] | Specific resistance ($\Omega \cdot cm$) | Surface state |
|---|---|---|---|---|---|
| 9 | $B_2O_3$ | 1200 [120] | 380 [38] | $1 \times 10^{15}$ | Good |
| 10 | $P_2O_5$ | 1300 [130] | 600 [60] | $6 \times 10^{14}$ | Good |
| Comparative 3 | $P_2O_5$ | 1100 [110] | 820 [82] | $3 \times 10^{14}$ | Good |

Comparative Example 4

A solution of water glass (JIS No. 3) (207 g) in water (93 g) was dropwise added to sulfuric acid (3.5 mol/liter; 100 ml) at 15°C. The reaction mixture was transferred to a separation funnel, tetrahydrofuran (400 ml) and sodium chloride (100 g) were added thereto, and the resultant mixture was shaken vigorously. The tetrahydrofuran layer containing silicic acid was separated and recovered. The organic silicic acid solution (37.4 g) was admixed with a solution of methyltriethoxysilane (21.4 g) in tetrahydrofuran (44.8 g) to make a coating composition.

Using the coating composition, a coating film of silicon oxide was formed as in Example 1. The coating film showed a good surface state. Since it was not wettable to an etching solution, the etching rate could not be measured.

**Claims**

1. A coating composition for formation of a coating film of silicon oxide on the surface of an inorganic

5

**0 100 780**

substrate comprising a polar organic solvent and silicic acid dissolved therein, the molar ratio of water and silicic acid therein being not more than 5 and the silicic acid being the one prepared by acidifying at least one silicon compound chosen from silicic acid and its salts with an acid in an aqueous medium.

2. The coating composition according to claim 1, wherein the silicon compound is chosen from water glass, sodium silicate, potassium silicate and potassium water silicate.

3. The coating composition according to claim 1, wherein the acid is chosen from hydrochloric acid, sulfuric acid and nitric acid.

4. The coating composition according to claim 1, wherein the silicic acid is the one prepared by acidifying at least one silicon compound chosen from silicic acid and its salts with an acid in an aqueous medium and treating the resultant aqueous silicic acid solution with a polar organic solvent.

5. The coating composition according to claim 1, wherein the treatment of the aqueous silicic acid solution with the polar organic solvent is carried out in the presence of an inorganic electrolyte.

6. The coating composition according to claim 1, which further comprises at least one modifier chosen from boron compounds, phosphorus compounds, arsenic compounds and antimony compounds.

7. The coating composition according to claim 6, wherein the modifier is used in an amount of not more than 100 parts by weight in terms of its oxide to 100 parts by weight of silicon oxide after baking.

8. A method for formation of a coating film of silicon oxide on the surface of an inorganic substrate by applying a coating composition comprising a silicon compound onto the said surface to make a coating composition layer and subjecting the said surface having the coating composition layer to heat treatment to make a coating film of silicon oxide, characterized in that a coating composition is applied to the surface of an inorganic substrate which composition comprises a polar organic solvent and silicic acid dissolved therein, the molar ratio of water and silicic acid therein being not more than 5 and the silicic acid being the one prepared by acidifying at least one silicon compound chosen from silicic acid and its salts with an acid in an aqueous medium.

9. The method according to claim 8, wherein the inorganic substrate is a glass or silicon wafer.

**Patentansprüche**

1. Beschichtungsmasse zur Bildung eines Beschichtungsfilms aus Siliciumoxid auf der Oberfläche eines anorganischen Substrats, enthaltend ein polares organisches Lösungsmittel und in diesem gelöst Kieselsäure, wobei das Stoffmengenverhältnis ("Molverhältnis") Wasser zu Kieselsäure nicht größer als 5 ist und die Kieselsäure eine solche ist, die durch Ansäuern wenigstens einer aus Kieselsäure und deren Salzen ausgewählten Silicium-Verbindung mit einer Säure in einem wäßrigen Medium hergestellt ist.

2. Beschichtungsmasse nach Anspruch 1, dadurch gekennzeichnet, daß die Silicium-Verbindung aus Wasserglas, Natriumsilicat, Kaliumsilicat und Kaliumwasserglas ausgewählt ist.

3. Beschichtungsmasse nach Anspruch 1, dadurch gekennzeichnet, daß die Säure aus Salzsäure, Schwefelsäure und Salpetersäure ausgewählt ist.

4. Beschichtungsmasse nach Anspruch 1, dadurch gekennzeichnet, daß die Kieselsäure eine solche ist, die durch Ansäuern wenigstens einer aus Kieselsäure und deren Salzen ausgewählten Silicium-Verbindung mit einer Säure in einem wäßrigen Medium und Behandeln der resultierenden wäßrigen Kieselsäure-Lösung mit einem polaren organischen Lösungsmittel hergestellt ist.

5. Beschichtungsmasse nach Anspruch 1, dadurch gekennzeichnet, daß die Behandlung der wäßrigen Kieselsäure-Lösung mit dem polaren organischen Lösungsmittel in Gegenwart eines anorganischen Elektrolyten durchgeführt wird.

6. Beschichtungsmasse nach Anspruch 1, dadurch gekennzeichnet, daß sie weiterhin wenigstens eine Reglersubstanz enthält, die aus Bor-Verbindungen, Phosphor-Verbindungen, Arsen-Verbindungen und Antimon-Verbindungen ausgewählt ist.

7. Beschichtungsmasse nach Anspruch 6, dadurch gekennzeichnet, daß die Reglersubstanz in einer Menge von nicht mehr als 100 Gew.-Teilen, berechnet auf die Form der Oxide nach dem Härten, auf 100 Gew.-Teile Siliciumoxid verwendet wird.

8. Verfahren zur Herstellung eines Beschichtungsfilms aus Siliciumoxid auf der Oberfläche eines anorganischen Substrats durch Auftragen einer eine Silicium-Verbindung enthaltenden Beschichtungsmasse auf die Oberfläche zur Bildung einer Schicht aus der Beschichtungsmasse und anschließende Wärmebehandlung zur Herstellung eines Beschichtungsfilms aus Siliciumdioxid, dadurch gekennzeichnet, daß auf die Oberfläche eines anorganischen Substrats eine Beschichtungsmasse aufgetragen wird, die ein polares organisches Lösungsmittel und in diesem gelöst Kieselsäure enthält, wobei das Stoffmengenverhältnis Wasser zu Kieselsäure nicht größer als 5 ist und die Kieselsäure eine solche ist, die durch Ansäuern wenigstens einer aus Kieselsäure und deren Salzen ausgewählten Silicium-Verbindung mit einer Säure in einem wäßrigen Medium hergestellt ist.

9. Verfahren nach Anspruch 8, dadurch gekennzeichnet, daß das anorganische Substrat ein Glas- oder Silicium-Plättchen (Wafer) ist.

**Revendications**

1. Composition de revêtement pour la formation d'un film de revêtement d'oxyde de silicium sur la surface d'un substrat inorganique, comprenant un solvant organique polaire et de l'acide silicique dissous dans celui-ci, le rapport molaire de l'eau à l'acide silicique étant de pas plus de 5 et l'acide silicique étant préparé par acidification d'au moins un composé de silicium choisi parmi l'acide silicique et ses sels par un acide en milieu aqueux.

2. Composition de revêtement selon la revendication 1, dans laquelle le composé de silicium est choisi parmi le verre soluble, le silicate de sodium, le silicate de potassium et le silicate de potassium-eau.

3. Composition de revêtement selon la revendication 1, dans laquelle l'acide est choisi parmi l'acide chlorhydrique, l'acide sulfurique et l'acide nitrique.

4. Composition de revêtement selon la revendication 1, dans laquelle l'acide silicique est préparé par acidification d'au moins un composé de silicium choisi parmi l'acide silicique et ses sels par un acide en milieu aqueux et traitement de la solution aqueuse résultante d'acide silicique par un solvant organique polaire.

5. Composition de revêtement selon la revendication 1, dans laquelle le traitement de la solution aqueuse d'acide silicique par le solvant organique polaire est mis en oeuvre en présence d'un électrolyte inorganique.

6. Composition de revêtement selon la revendication 1, qui comprend en outre au moins un modificateur choisi parmi les composés de bore, les composés de phosphore, les composés d'arsenic et les composés d'antimoine.

7. Composition de revêtement selon la revendication 6, dans laquelle le modificateur est utilisé en quantité de pas plus de 100 parties en poids, en oxyde, pour 100 parties en poids d'oxyde de silicium après cuisson.

8. Procédé pour la fabrication d'un film de revêtement d'oxyde de silicium sur la surface d'un substrat inorganique par application d'une composition de revêtement comprenant un composé de silicium sur ladite surface pour produire une couche de la composition de revêtement et traitement thermique de ladite surface portant la couche de la composition de revêtement pour produire un film de revêtement d'oxyde de silicium, caractérisé en ce que la composition de revêtement est appliquée sur la surface d'un substrat inorganique, ladite composition comprenant un solvant organique polaire et de l'acide silicique dissous dans celui-ci, le rapport molaire de l'eau à l'acide silicique étant de pas plus de 5 et l'acide silicique étant préparé par acidification d'au moins un composé de silicium choisi parmi l'acide silicique et ses sels par un acide en milieu aqueux.

9. Procédé selon la revendication 8, dans lequel le substrat inorganique est une pastille de verre ou de silicium.